# EUROPEAN PATENT APPLICATION

(11) **EP 0 872 176 A2**
(43) Date of publication of application: **21.10.1998**
(21) Application number: 98300815.2
(22) Date of filing: 04.02.1998
(51) Int. Cl.: A01J 21/00, B65B 63/08, A23L 3/36, A23G 3/02, A23G 1/28, A23G 7/02

(54) **Apparatus and method for making patties**

(30) Priority: 17.04.1997 US 843896
(71) Applicant: Butterball Farms, Inc., Grand Rapids, Michigan 49507 (US)
(72) Inventor: Komdeur, Kasper, Jenison, Michigan 49428 (US); Smith, Richard Clark, Rockford, Michigan 49341 (US)
(74) Representative: Parry, Christopher Stephen

(57) **Abstract**

The invention includes an apparatus (20) and a method for making patties of a product such as butter. It uses a moveable tray (21) with product receiving pockets, and it fills the pockets with a liquid form of the product, advances the tray through a cooling area until the product solidifies in the pockets, and overturns the tray to discharge the patties.

## Description

The present invention relates to an apparatus and a method for making patties of a product such as butter and, more particularly, to a unique apparatus and method for filling pockets of a tray member with a liquid or "warm" form of the product, advancing the tray through a cooling area until the product solidifies into patties, and overturning the tray member to discharge the patties.

The prior art includes a variety of apparatus and methods used to form patties of butter, margarine, ice cream and similar products. The patties are discrete servings that typically define intricate embossments on their non-supported surfaces. Forming them involves injecting a liquid form of the product into a mold, placing the mold in a refrigerated enclosure until the product solidifies into a patty, and removing the patty from the mold. These prior procedures require the use of a number of separate pieces of equipment. They are complex and labor-intensive, and thus difficult to manage and costly.

Accordingly, it is desirable to automate these discrete procedures into one continuous process. The apparatus and method of the present invention does just that. It provides a continuous operation through filling, solidifying, discharging and packaging steps. The apparatus of this invention is a simple construction that conveys a mold to filling, cooling, over-turning, discharging and packaging stations without interruption or human intervention. It produces a large volume of patties in a simple, high-speed manner; and it minimizes the cost of operation. Therefore, the apparatus and method of the present invention minimize the cost of producing the resulting patties.

In accordance with one embodiment of this invention, a tray member moves along a predetermined path of operation defined by a frame assembly. This tray includes one or more resilient pocket portions that define an embossment and receive a certain amount of a product. The pocket portions are displaceable and turn inside-out to allow easy discharge of the product.

Advancing means such as a continuous chain and motor drive push or pull the tray member along the path of operation to a first location where a filling assembly discharges a predetermined amount of a product in liquid form into each pocket portion. The advancing means then drives the tray member to a refrigerated area where the product solidifies.

To increase the duration that the tray member remains in this cooling area and assure that the product in the pocket portions solidifies while allowing the other operations to continue, a conveying assembly in the cooling area moves the tray member along a sinuous path. This conveying assembly includes horizontal rail segments and turning assemblies that maintain the tray member in a horizontal position during the entire path of travel in the refrigerated area.

The advancing means then moves the tray member out of the cooling area to a location where the frame guides the tray member to an overturned position. During this operation, the tray member continues to move along the path of operation to the next station. At the next station, discharging means force the pocket portions to an inside-out position while pushing the patties out of the pocket portions and onto a cooled conveyor that takes the patties to a packaging station where the apparatus places the patties in packages.

After the patties have discharged from it, the tray member moves to a station where re-setting means assures that the pockets of the tray have moved back to their original position -- the position in which they receive the product. The advancing means then moves the tray member to a starting position from which the apparatus repeats all of the operations described above.

For a more complete understanding of this invention, one should now refer to the embodiment illustrated in greater detail in the accompanying drawings and described below by way of an example of the invention. In the drawings:
FIG. 1A is a front elevation view of the middle portion of the apparatus of the present invention;
FIG. 1B is a front elevation view of the left side portion of the apparatus of the present invention;
FIG. 1C is a front elevation view of the right portion of the apparatus of the present invention;
FIG. 2 is a partial perspective view of the cooling apparatus used to cool the conveyor that receives solidified patties;
FIG. 3 is a perspective view of the tray member used in the apparatus of the present invention;
FIG. 4 is a partial perspective view of the connection between the tray member and the chains of the advancing assembly;
FIG. 5 is a partial perspective view, showing one of the connections between the tray member and one of the chains;
FIG. 5A is an enlarged perspective view, showing the connection of FIG. 5 with the chain pulled away from the tray member;
FIG. 6 is a schematic view, showing the movement of the tray members in a cooled enclosure as they move along a sinuous path;
FIG. 7 is a partial perspective view of a turning assembly at one end portion of the conveying assembly in the cooled enclosure;
FIG. 8 is a partial perspective view of a turning assembly at an opposite end portion of the conveying assembly in the cooled enclosure;
FIG. 9 is a partial perspective view of a tray member disposed on rails and driven by two chains;
FIG. 10 is a partial perspective view of the overturning assembly that guides the tray members to an upside down position;
FIG. 11 is a partial perspective view of the overturning assembly, showing the portion of the assembly that guides the leading end of the tray member downwardly;
FIG. 12 is a partial perspective view of the overturning assembly, showing the portion of the assembly that guides the leading end of an overturned tray member upwardly;
FIG. 13 is a partial perspective view of the overturning assembly, showing the portion of the assembly shown in FIG. 12 as it guides the tail end of an overturned tray member upwardly;
FIG. 14 is a sectional view of a mold used to make the resilient segments of the tray member;
FIG. 15 is an enlarged view of a detail in FIG. 14; and
FIG. 16 is a perspective view of a resilient segment of the tray member.

While the following disclosure describes the invention in connection with one embodiment and modifications, one should understand that the invention is not limited to this embodiment and modifications. Furthermore, one should understand that the drawings are not to scale and that graphic symbols, diagrammatic representatives, and fragmentary views, in part, may illustrate the embodiment and modifications. In certain instances, the disclosure may not include details which are not necessary for an understanding of the present invention such as conventional details of fabrication and assembly.

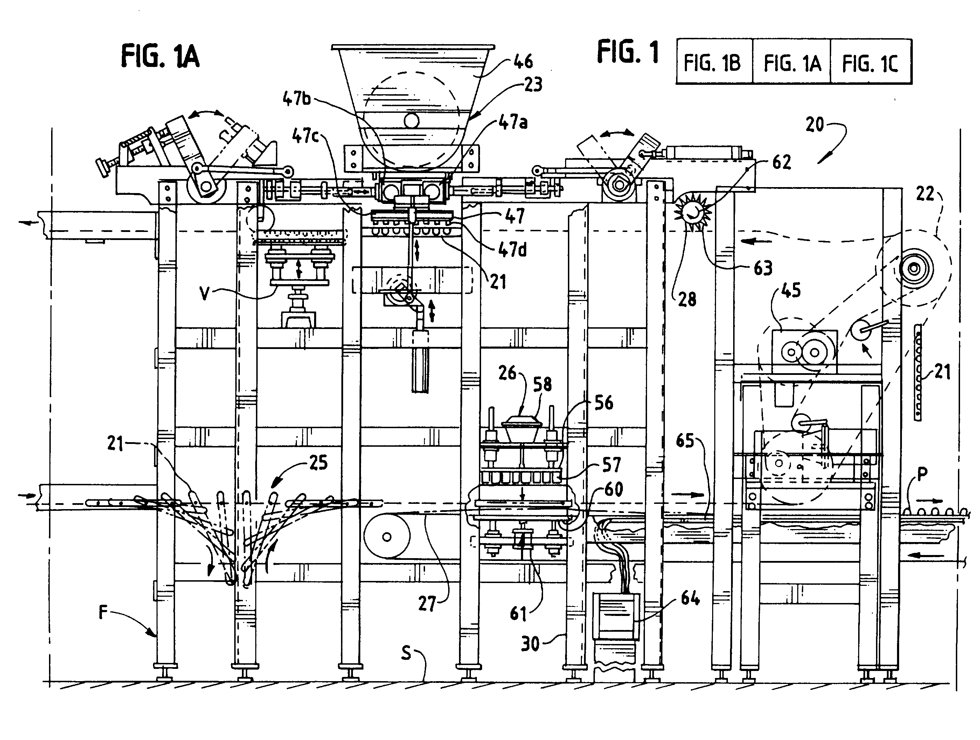

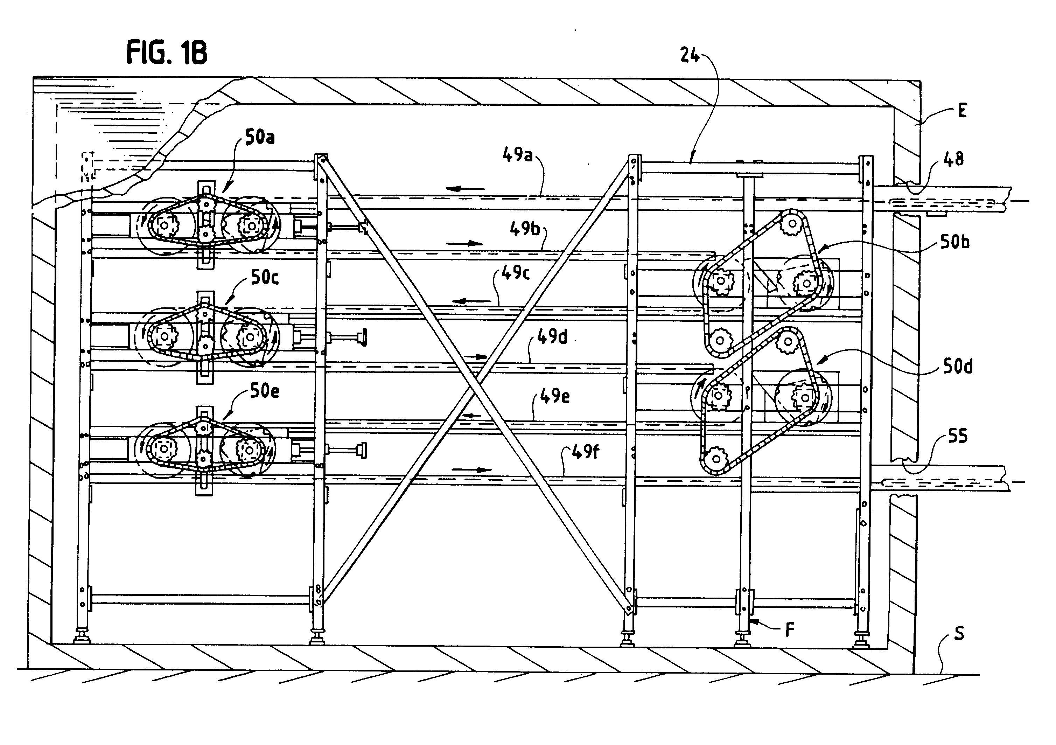

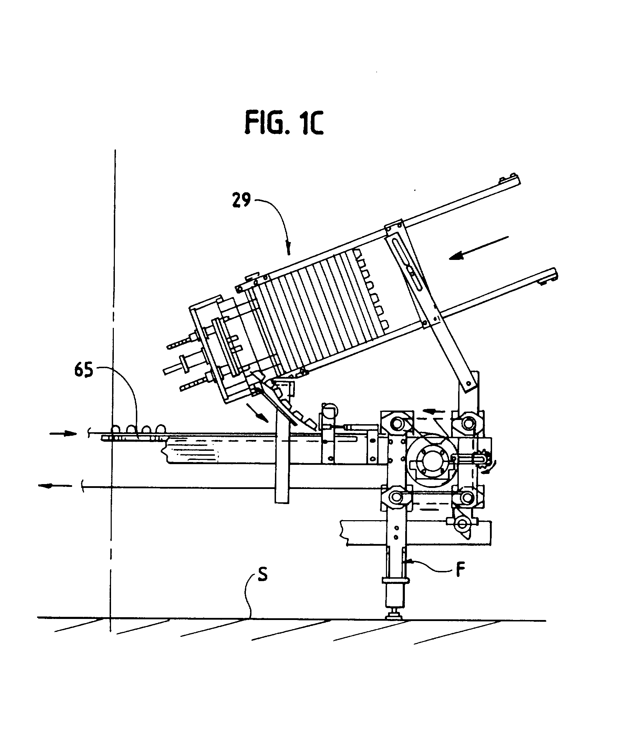

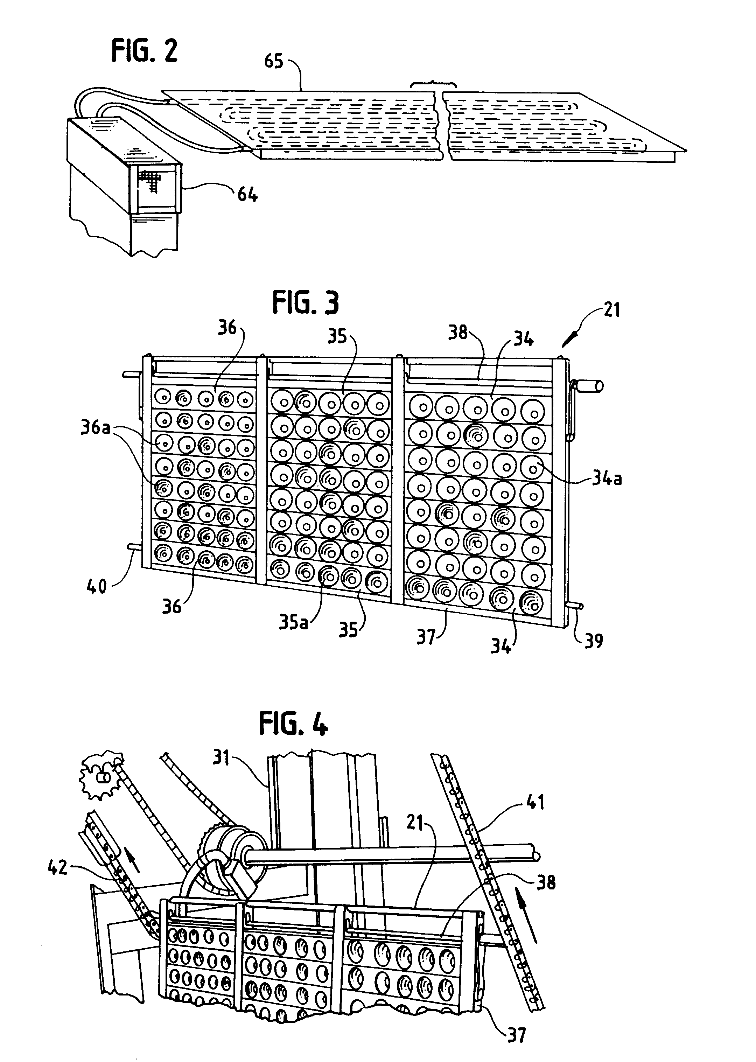

Turning now to the drawings and referring first to FIGS. 1A, 1B, and 1C, the apparatus of the present invention shown generally at 20 produces discrete, patties P of a product such as butter, margarine, ice cream, etc. The apparatus 20 forms the patties P in tray members 21 (See FIG. 3) that move along a predetermined path of operation on a frame assembly F disposed on a horizontal surface S.

A chain and drive assembly 22 advances each tray member 21 first to a filling assembly 23 that fills pocket portions of the tray with product, a conveying assembly 24 disposed in a cooling enclosure E where the product solidifies into patties P, an overturning station 25 where each tray member turns upside down, a discharging or "punch out" assembly 26 that forces the patties off of the tray member and onto a conveyor 27, and to a re-setting assembly 28 that pushes the pocket portions of the tray member into position for again receiving product from the filling assembly 23. The conveyor 27 moves the patties P to a packaging assembly 29 that packages the patties for delivery to consumers.

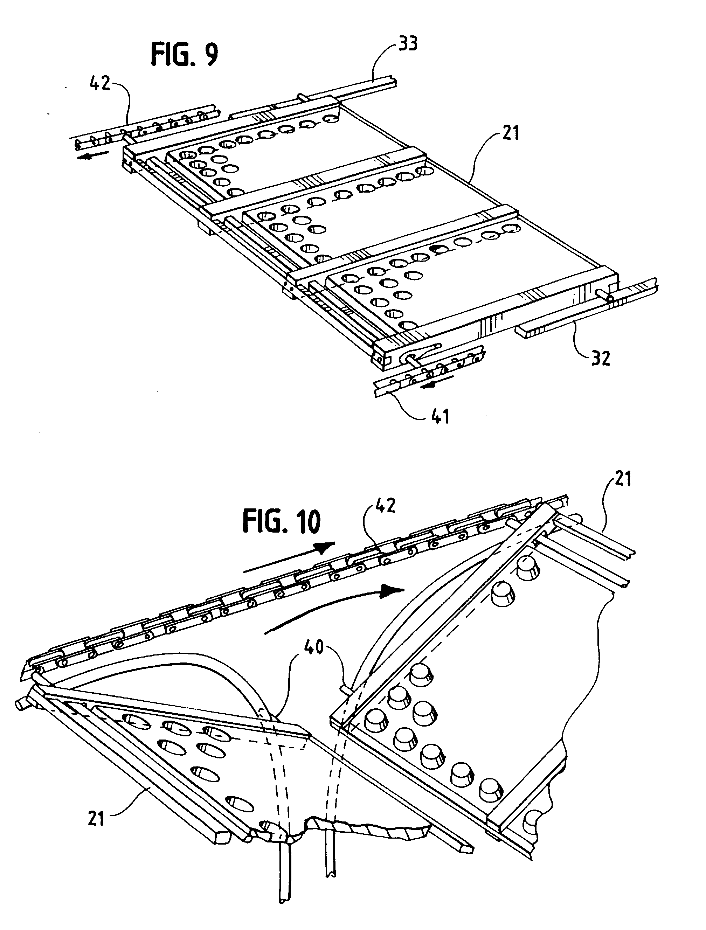

The frame assembly F defines the path of operation of the apparatus of the present invention 20 and supports the various assemblies 24-29 identified above. It includes a pair of side frames 30 and 31 (See FIG. 4) united by suitable cross-members (not shown). It also includes rails 32 and 33 (See FIG. 9) that support the tray members 21 as they move along the path of operation.

Each tray member 21 (See FIG. 3) includes three resilient segments 34, 35, and 36 and a rigid frame segment 37 that surrounds the three resilient segments and supports them. The frame segment 37 is made of sheet metal or any other material of sufficient strength and rigidity; and it includes a connecting rod 38 for connecting the tray member 21 to the chain and drive assembly 22, as described below. It also includes a pair of pins 39 and 40, disposed on opposite sides, for engaging the rails 32 and 33 and sliding on them (See FIG 9).

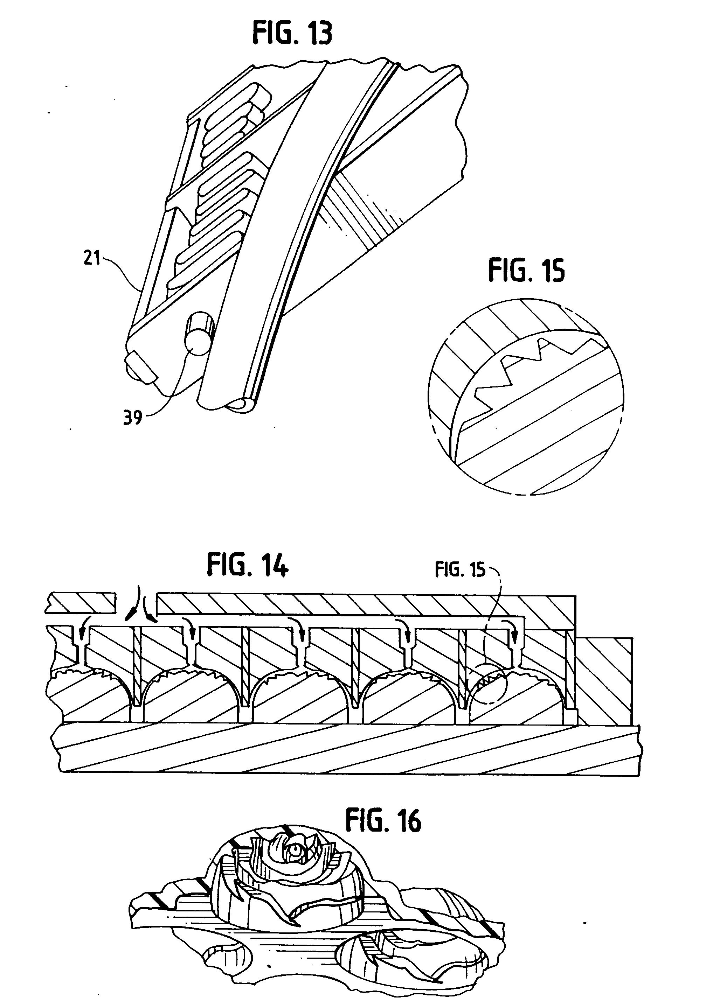

The resilient segments 34, 35 and 36 are made of a silicone rubber material or any other suitable material. (SILASTIC® silicone rubber material made by Dow Corning Corporation is one example of such a material.) The segments 34, 35 and 36 define pocket portions 34a, 35a, and 36a, respectively. Those pocket portions lie in uniform rows and columns separated by support portions. Each pocket has an inside surface with embossments that transfer onto the product that the pocket receives. The walls of the pockets have a maximum thickness that is smaller than the maximum thickness of the support portions (See FIGS. 14-16).

Although the drawing shows a tray member 21 with three resilient segments 34-36, the tray member may have less than three such segments; or it may have more than three segments. In addition, the resilient segments may have any suitable configuration and include any number of pockets arranged in any suitable manner.

As further described below, the discharging assembly 26 applies pressure to the pocket portions and turns them inside out, thus forcing the patties P out of the pocket portions. This feature allows the use of embossments with overhanging parts. After a patty P discharges from a pocket portion, the pocket portion either "self-adjusts", moving back to the original position, or the re-setting assembly 28 moves it to that position.

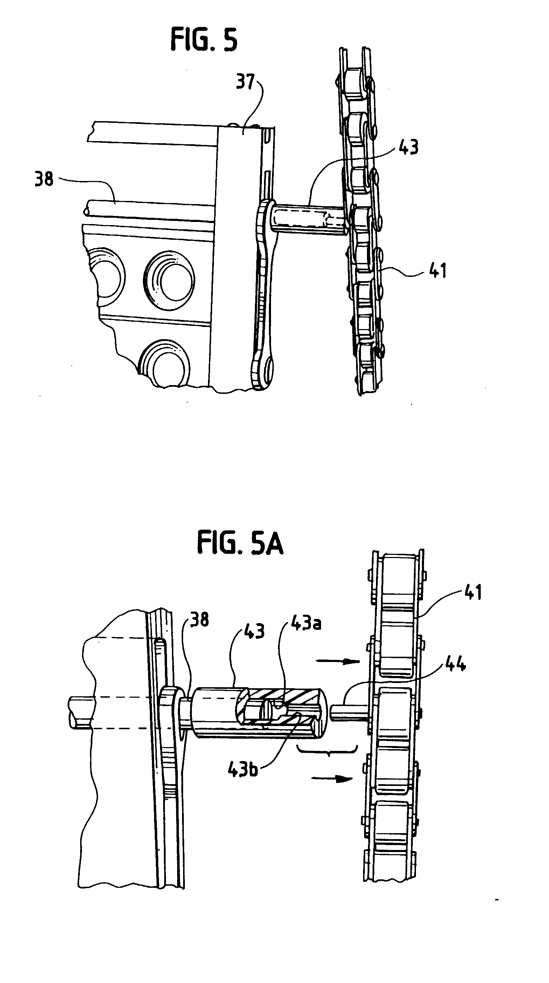

As stated above, the connecting rod 38 connects the tray member 21 to chains 41 and 42 of the drive assembly 22. Specifically, a tube 45 connects the rod 38 with a pin 44 which lies fixedly secured to either the chain 41 or the chain 42 of the chain and drive assembly 22. As shown in FIGS. 5 and 5A, the tube 43 includes a bore 43a for receiving an end portion of the rod 38 and a bore 43b for receiving an end portion of the pin 44 that lies fixedly secured to the chain 41. A similar connection releasably secures the other side of the tray member 21 to the chain 42.

In addition to the chains 41 and 42, the chain and drive assembly 22 includes a motor 45 disposed on the frame F along with suitable gears, sprockets and pulleys for driving the chains. (See FIG. 1A) The chains 41 and 42 are continuous; and they extend along the path of operation of the apparatus 20, as further described below, driving tray members 21 along the path. The movement of the tray members 21, however, is not continuous. Suitable controls (not shown) allow for intermittent stops for the tray members 21 so that the apparatus may load and unload them.

At one stop, the filling assembly 23 fills each pocket of the tray member 21 with a liquid form of a product. This assembly 23 includes a hopper 46 and a spout assembly 47, including a pair of pneumatically controlled metering chambers 47a and 47b, a manifold 47c, and a spout 47d for each pocket portion of the tray member 21. (See FIG. 1A) After a tray member 21 moves into position under the spouts 47d, the assembly 23 discharges a predetermined amount of the product into each pocket portion. After this operation, the chain and drive assembly 22 then moves the tray member 21 further along the path of operation to a vibrating mechanism V that vibrates the tray member 21 so that the product settles into the tray pockets and into the refrigerated enclosure E through an opening 48.

The enclosure E contains the conveying assembly 24 which keeps the tray members 21 in the cooled environment for a predetermined duration so that the liquid product in each pocket of the tray member 21 solidifies into a patty P. The conveying assembly 24 (See FIGS. 1B, 6, 7 and 8) lies on a portion of the frame F and includes six rail segments 49a-f and five turning assemblies 50a-e. Each rail segment includes rails 32 and 33 with suitable frame supports.

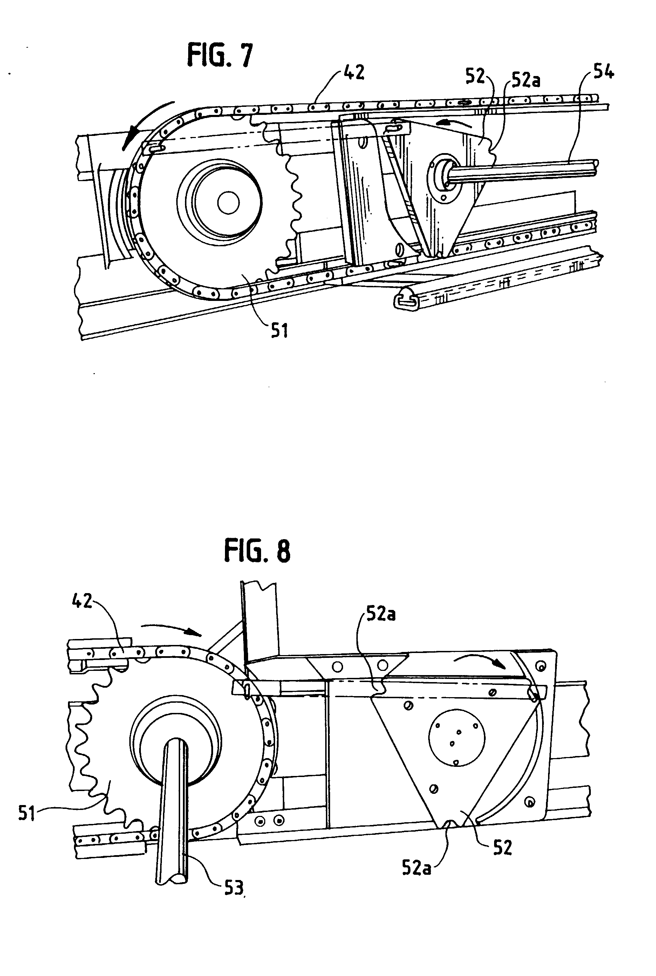

As shown in FIGS. 7 and 8, each turning assembly includes a pair of first, rotatable sprockets 51, a pair of second rotatable members 52, an axle 53 for the pair of sprockets 51, an axle 54 for the pair of second rotatable members 52, and a drive (including a motor, chain and gears, See FIG. 1B) for the two pairs of the rotatable members 51 and 52. (The drawings show only one of each pair of members, either those on the near side of the frame or on the far side.)

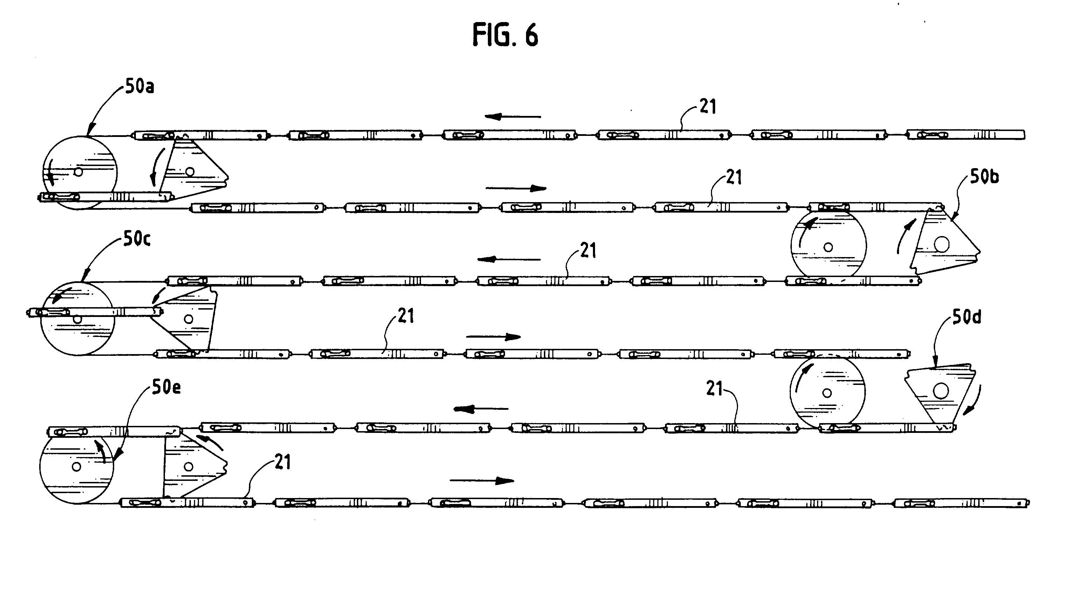

In operation, the sprockets 51 guide the chains 41 and 42 from one rail segment down to the next rail segment. (The tray members 21 move along with the chains from one segment to the next, See FIG. 6.) The second rotatable members 52 have a generally triangular configuration and include grooves 52a at each corner for receiving the pins 39 and 40 and thus supporting one end of the tray member 21 as it moves between the rail segments. As shown in FIG. 6, the tail end of the tray member 21 alternates between the one with the chain connections and the one with the pins 39 and 40. Along the final segment 49f, the leading end of each tray member 21 is the end with the pins 39 and 40. This orientation allows the tray members 21 to turn upside down at the overturning station 25, as described below.

The conveying assembly 24 maintains the tray members 21 in a horizontal position during the entire path of travel from the top of the enclosure E to the bottom of the enclosure. (Although the drawings show a conveying assembly with six rail segments, the conveying assembly 24 may include less than six segments or more than six segments.) The tray members 21 move out of the enclosure E through an opening 55 and to the station 25.

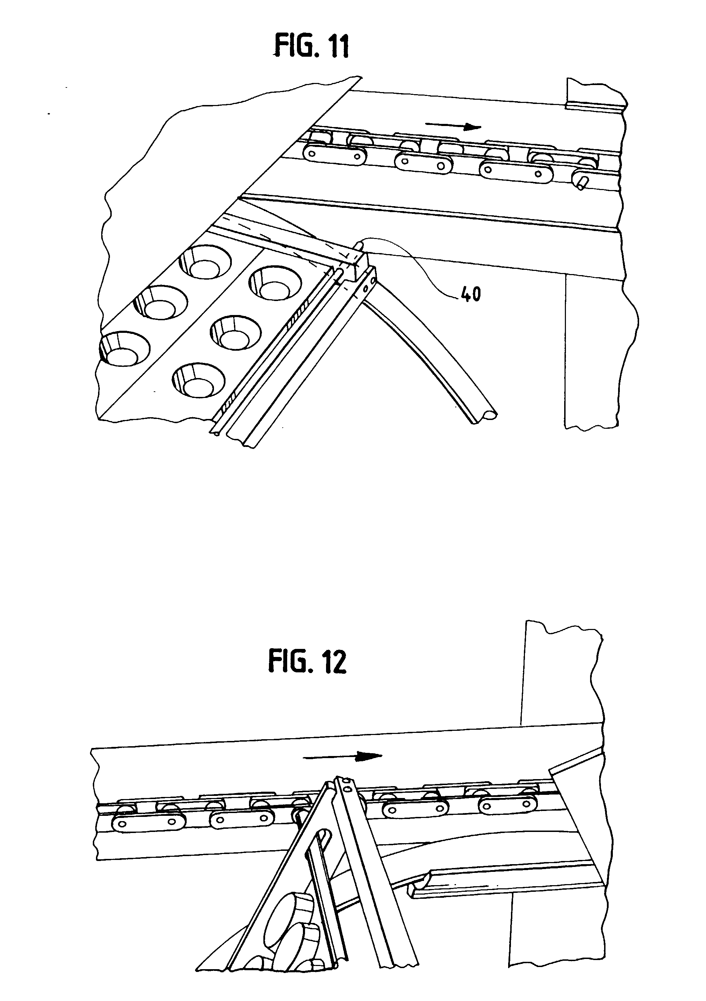

At the overturning station 25 (See FIGS. 1A, 10, 11, 12 and 13), the rails upon which the pins 39 and 40 slide extend away from the path of the chains 41 and 42 and then back to it. This "gap" allows the leading end of the tray member 21 to drop farther below the chains 41 and 42 (See FIG. 10) while the tail end of the tray member remains secured to the chains (See FIGS. 10 and 12). The tail end then becomes the leading end (See FIGS. 10 and 12); and the leading end becomes the tail end (See FIGS. 10 and 13). Also, the top of the tray member 21 becomes the bottom with the pocket portions -opening towards the bottom of the apparatus 20.

The overturned tray members 21 then move to the discharging assembly 26 which pushes the patties out of the pocket portions and onto the conveyor 27 (See FIG. 1A). This assembly 26 includes a plate 56 with a finger element 57 for each pocket of the tray member 21. It also includes a pneumatic drive and guide rod arrangement 58 which drives the plate 56 against the tray member 21. When the controls of the apparatus 20 move a tray member 21 in registry with the finger elements 57, the drive 58 moves the plate 56 downwardly against the pocket portions until the pocket portions turn inside out and the patties P discharge from them onto a package substrate (not shown) on the conveyor 27. As the plate 56 moves downwardly, a platform 59 lifts a belt 60 of the conveyor 27 upwardly to facilitate the transfer. A pneumatic drive and guide rod arrangement 61 moves the platform 49 upwardly and downwardly.

The apparatus 20 then moves the tray member 21 up to a re-setting assembly 28 where a rotary member 62 moves to their original positions pocket portions that have not moved back to the original product receiving position on their own. The rotary member 62 includes protuberances 63 that move into registry with the pocket portions as the member 62 rotates and as the tray member 21 slides along the path of operation. The tray members 21 then move back to the starting point of the path and to filling assembly 23.

The conveyor 27 moves the patties P to the packaging assembly 29 which places a lid L over them. (A packaged air cooled chiller 64 such as Model PACT-185 manufactured by Drake Refrigeration Inc. of Port St. Lucie, Florida, including a slide plate 65 (See FIG. 2), cool the belt of the conveyor 27 so that the patties do not melt.) The lid L includes cavities that receive the patties; and the assembly 29 places the lid so that the cavities register with the patties. Conventional sealing means (not shown) then seal the lid L with the substrate disposed below the patties to form a package suitable for shipping the patties to a consumer.

While the above description and the drawings disclose and illustrate one embodiment and modifications, one should understand, of course, that the invention is not limited to this embodiment and modifications. Those skilled in the art to which the invention pertains may make other modifications and other embodiments employing the principles of this invention, particularly upon considering the foregoing teachings. For example, rather than discharging onto the conveyor 27, the patties P may discharge directly into cavities of a package that is suitable for shipping. Therefore, by the appended claims, the applicant intends to cover any modifications and other embodiments as incorporate those features which constitute the essential features of this invention.

## Claims

1. An apparatus for making patties of a product, said apparatus comprising:
a frame member;
at least one moveable tray member disposed on the frame member for movement along a predetermined path on said frame;
advancing means operably associated with the frame member for advancing the tray member along the frame;
filling means disposed proximate the path of the tray for filling the tray member with a liquid form of the product at a predetermined position;
conveying means for moving the tray along a sinuous path with a plurality of straight path segments at a predetermined location to increase the time that the tray remains in that location to assure that the product solidifies;
overturning means for overturning the tray so that the solidified product may discharge from the tray.

2. The apparatus of claim 1, further comprising discharging means operably associated with the frame for engaging said tray and forcing said product out of the tray.

3. The apparatus of claim 1, wherein the advancing means includes a pair of continuous chains mounted on the frame for pushing or pulling the tray member along the predetermined path on the frame.

4. The apparatus of claim 1, further comprising a housing disposed around the delaying means for containing a cooling medium for cooling the product.

5. The apparatus of claim 1, wherein the tray member defines a plurality of pockets for the product and the filling means includes a plurality of spouts for injecting the product into the pockets.

6. The apparatus of claim 3, wherein the conveying means includes:
support means for supporting the tray member at a vertically spaced, parallel paths;
at least one pair of first, rotating members disposed proximate an end of one path; and
at least one pair of second, rotating member disposed proximate the first rotating member;
said pair of first rotating members guiding said pair of continuous chains from one straight path segment to the next and said pair of second rotating members receiving said tray and supporting the tray as the tray moves between straight path segments.

7. The apparatus of claim 6, wherein each of the first pair of rotating members is a sprocket that cooperates with one of the chains.

8. The apparatus of claim 6, wherein each of the second rotating members includes at least one groove for receiving a protruding portion of the tray member.

9. The apparatus of claim 8, wherein each of the second rotating members has a substantially triangular configuration with truncated corners that each define a groove.

10. The apparatus of claim 1, wherein the overturning means includes frame portions that guide one end of the tray member away from the predetermined path of travel of the tray member for a predetermined duration.

11. The apparatus of claim 10, wherein the frame portion are curved with one portion curving outwardly of the path and a corresponding portion curving inwardly of the path.

12. The apparatus of claim 3, wherein pin members connect the tray member with the chains.

13. The apparatus of claim 1, wherein the tray member includes a plurality of resilient product receiving pocket portions that are displaceable so that they turn inside out under a predetermined force.

14. The apparatus of claim 13, wherein the tray member includes a resilient segment that defines the product receiving pocket portions and support portions disposed between the pocket portions, said pocket portions being displaceable relative to the support portions.

15. The apparatus of claim 14, wherein the pocket portions have an irregular surface including a part that overhangs another part.

16. The apparatus of claim 1, further comprising vibrating means for vibrating the tray member, after the filling means deposits product in the tray member, so that the product may settle in the tray member.

17. The apparatus of claim 2, further comprising a second conveying means for receiving discharged patties.

18. The apparatus of claim 17, wherein the second conveying means includes cooling means for cooling the patties.

19. A conveying assembly for moving a tray member along a sinuous path with a plurality of straight path segments while maintaining the tray in a horizontal position, said tray member being driven by a pair of continuous chains, said assembly comprising:
a frame member including support means for supporting the tray member;
at least one pair of first, rotating members disposed proximate an end of one path; and
at least one pair of second, rotating members disposed proximate the first pair of rotating members;
said pair of first rotating members guiding said pair of continuous chains from one straight path to the next and said pair of second rotating members receiving said tray and supporting the tray as the tray moves between straight path segments.

20. The apparatus of claim 19, wherein each of the pair of first rotating members is a sprocket that cooperates with a chain.

21. The apparatus of claim 19, wherein each of the second rotating members includes at least one groove for receiving a protruding portion of the tray member.

22. The apparatus of claim 21, wherein each of the second rotating members has a substantially triangular configuration with truncated corners that each define a groove.

23. An assembly for overturning a tray member as it moves along a predetermined path, said assembly comprising:
a frame member including portions that guide one end of the tray member away from the path for a predetermined duration; and
advancing means for moving the tray member along the predetermined path.

24. The apparatus of claim 23, wherein the frame portions are curved with one portion curving outwardly of the path and a corresponding portion curving inwardly of the path.

25. A tray member for receiving a liquid product and for holding the product until it solidifies, said member comprising: a rigid frame segment; a resilient segment secured to the frame segment, said resilient segment defining at least one product receiving pocket portion, said pocket portion being displaceable so that it can be turned inside out.

26. The tray member of claim 25, wherein the resilient segment defines a plurality of pocket portions and includes support portions disposed between the pocket portions.

27. The tray member of claim 26, wherein the thickest part of the support portions has a greater thickness than the thickest part of the pocket portions.

28. The tray member of claim 25, wherein the frame segment includes attaching means for attaching the tray member to a driving means that advances the tray member along a predetermined path.

29. The tray member of claim 26, wherein the tray member includes a plurality of resilient segments.

30. A method of making patties of a product using a tray member defining a plurality of pockets and frame means for supporting the tray member, said method comprising the steps of:
(a) filling the pockets of the tray member with a liquid form of the product;
(b) advancing the tray member into a cooling area;
(c) conveying the tray member within the cooling area until the product solidifies into patties;
(d) advancing the tray member out of the cooling area;
(e) overturning the tray member; and
(f) discharging the patties from the tray member.

31. The method of claim 30, further comprising the step of vibrating the tray member after filling the pockets of the tray member with a liquid.

32. The method of claim 30, wherein the tray member is conveyed along a sinuous path in the cooling area.

33. The method of claim 32, wherein the tray member is maintained in a horizontal position during its travel along the sinuous path.

34. The method of claim 30, further comprising the steps of packaging the discharged patties.
